# EUROPÄISCHE PATENTSCHRIFT

(11) **EP 3 557 948 B1**
(45) Veröffentlichungstag und Bekanntmachung des Hinweises auf die Patenterteilung: **09.09.2020**
(21) Anmeldenummer: 19155402.1
(22) Anmeldetag: 05.02.2019
(51) Int. Cl.: H05B 45/375

(54) **DIMMSCHALTUNG FÜR EIN TRÄGHEITSFREIES LEUCHTMITTEL SOWIE DIMMVERFAHREN**
DIMMER SWITCH FOR INERTIA-FREE ILLUMINANT AND DIMMING METHOD
CIRCUIT DE GRADATION POUR UN MOYEN LUMINEUX SANS INERTIE AINSI QUE PROCÉDÉ DE GRADATION

(30) Priorität: 17.04.2018 DE 102018109045
(43) Veröffentlichungstag der Anmeldung: 23.10.2019
(73) Patentinhaber: Insta GmbH, 58509 Lüdenscheid (DE)
(72) Erfinder: Grosch, Volker, 45549 Sprockhövel (DE); Herzog, Dirk, 58513 Lüdenscheid (DE); Hopp, Christian, 44139 Dortmund (DE); Wüller, Stefan, 58553 Halver (DE)

(56) Entgegenhaltungen:
- DE-A1-102009 040 283
- DE-A1-102013 211 767
- DE-A1-102015 210 189
- DE-U1-202015 101 996

## Beschreibung

Die Erfindung betrifft eine Dimmschaltung nach dem Oberbegriff des Anspruchs 1. Beschrieben ist des Weiteren ein Verfahren zum Dimmen eines trägheitsfreien Leuchtmittels mit den Merkmalen des Oberbegriffs des Anspruchs 10.

Dimmschaltungen sind aus dem Stand der Technik bekannt. Bei Dimmschaltungen wird über unterschiedliche Verfahren eine einem Leuchtmittel zur Verfügung gestellte Leistung einem gewünschten Dimmwert angepasst. Typischerweise wird für ein Leuchtmittel die zur Verfügung gestellte Spannung oder der zur Verfügung gestellte Strom beim Dimmen abgesenkt wodurch das Leuchtmittel weniger hell leuchtet, also: gedimmt ist.

Dimmschaltungen dieser Art beziehen ihre Energie aus dem Wechselspannungsnetz. Die Wechselspannung nutzend, haben sich u.a. Puls-Verfahren wie Pulsweitenmodulations-Verfahren, Pulsabstandsmodulations-Verfahren und Bit-Angle-Modulationsverfahren als Dimmverfahren etabliert. Diese Verfahren können prinzipiell dadurch beschrieben werden, dass diese nur zwei Spannungszustände kennen, namentlich "keine Spannung vorhanden" und "Spannung vorhanden". Wenn keine Spannung vorhanden ist, ist das Leuchtmittel stromlos, während in dem anderen Zustand das Leuchtmittel immer mit einer konstanten Spannung beaufschlagt wird. Indem das zeitliche Verhältnis zwischen diesen beiden Zuständen variiert wird, können unterschiedliche Dimmstufen eingestellt werden.

Wird dieses Verfahren auf trägheitsfreie Leuchtmittel, wie etwa LEDs angewandt, besteht jedoch das Problem, dass die Leuchtmittel die einzelnen Spannungszustände trägheitsfrei und somit unmittelbar wiedergeben. Ein Beobachter nimmt dieses Verhalten als Flackern war. Auch wenn das Auge nur eine begrenzte zeitliche Auflösung bietet, so ergibt sich ein Problem bei zeitlich höher auflösenden Kameras: Eine hochauflösende Kamera nimmt Bilder in einer ersten Frequenz auf, während das Leuchtensystem in einer anderen Frequenz flackert. Durch Interferenzbildung können so Artefakte in Videoaufzeichnungen entstehen. Diese Artefakte können ebenfalls vom menschlichen Auge beobachtet werden, wenn ein sich in Bewegung befindlicher Gegenstand betrachtet wird.

Bei den vorstehend angesprochenen trägheitsfreien Leuchtmitteln handelt es sich um solche, die eine anliegende Spannung nahezu im gleichen Augenblick in Licht wandeln.

Ein anderes Verfahren zum Dimmen von trägheitsfreien Leuchtmitteln ist die Stromabsenkung. Beim Dimmen von LEDs führt dieses bei kleinen Dimmwerten zu einer Farbortverschiebung. Weiße LEDs basieren herstellungsbedingt auf blauen LEDs mit einem Farbkonverter. Bei der Herstellung von blauen LEDs sind jedoch grüne LEDs aufgrund des Herstellungsprozesses als letztendlich ungewünschte Nebenproduktionen in Kauf zu nehmen. Diese grünen LED-Teile besitzen einen geringeren Flusswiderstand als die blauen, sodass diese bereits bei einem geringeren Strom leuchten bzw. beim Dimmen bei einem relativ geringen Strom intensiver leuchten als die blauen. Aus diesem Grunde ist in solchen Situationen eine Farbortverschiebung ins Grüne zu beobachten.

DE 10 2015 210 189 A1 offenbart einen Mehrkanal-LED-Konverter, der mittels einer Steuerschaltung einen Leistungsschalter hochfrequent aktiviert bzw. deaktiviert. Zum Dimmen wird ein von der Steuerschaltung bereitgestelltes PWM-Signal genutzt, welches die Steuerschaltung zu vorgegebenen Zeiten dem hochfrequenten Ansteuerungssignal für den Leistungsschalter überlagert. Durch eine Veränderung der PWM-Frequenz werden unterschiedliche Dimmstufen bereitgestellt. Erreicht werden soll hierdurch eine Erhöhung der effektiven Abtastrate eines AD-Wandlers, der zur Erfassung der Ströme in den eingeschalteten Kanälen bei einem Mehrkanal-System genutzt wird, so dass weniger AD-Wandler als Kanäle verwendet werden können.

DE 20 2015 101 996 U1 offenbart einen Wandler für dimmbare LEDs. Bei diesem Wandler werden mittels einer Steuereinheit zwei unterschiedliche Leistungsschalter angesteuert. Ein erster Leistungsschalter wird mit einem hochfrequenten, ein zweiter, zu dem ersten Leistungsschalter seriell geschalteter Leistungsschalter mit einem niederfrequenten Signal angesteuert.

Zum Vermeiden der Visibilität der vorbeschriebenen Farbortverschiebungsproblematik sind hybride Dimmverfahren eingesetzt worden, die zwei Dimmtechnologien vereinen. Bei einem solchen hybriden Dimmverfahren wird zunächst die LED bis zu einem mittleren Level durch Stromdimmung gedimmt (beispielsweise bis zu einem Dimmwert von 20% - 30%). Dieser untere Dimmwert wird so festgelegt, dass sich bei Erreichen desselben eine Farbortverschiebung noch nicht bemerkbar macht. Dieses wird mit einem üblichen Schaltnetzteil durch entsprechende Ansteuerung des Leistungsschalters vorgenommen. Unterhalb dieses Dimmwertes wird dieses Dimmverfahren durch ein Puls-Dimmverfahren überlagert. Zu diesem Zweck ist Teil der Dimmschaltung ein zweiter, durch einen Pulsgenerator angesteuerter Leistungsschalter, der zum Beispiel parallel zu dem trägheitsfreien Leuchtmittel geschaltet ist. Ist der Leistungsschalter geschlossen, fließt der durch das Schaltnetzteil bereitgestellte Strom über diesen ab, und zwar mit dem Ergebnis, dass das trägheitsfreie Leuchtmittel in den Phasen, in denen dieser durch den Pulsgenerator angesteuerte Leistungsschalter geschlossen ist, unbestromt bleibt, mithin nicht leuchtet. Somit bildet dieser Pulsgenerator und der zweite Leistungsschalter einen Strombypass für das Leuchtmittel. Hierbei wird genutzt, dass in diesem unteren Dimmbereich eine Farbortverschiebung für den Betrachter nicht mehr wahrgenommen wird, da das Leuchtmittel allgemein nur sehr schwach, da gedimmt, leuchtet.

Nachteilig bei einer solchen Ausgestaltung ist, dass in Folge des Strombypass die Blindleistung und damit mittelbar die Verlustleistung nicht unbeträchtlich ist. Überdies wird mitunter der zum Realisieren eines solchen Verfahrens benötigte Hardwareaufwand als zu hoch angesehen.

Ausgehend von diesem diskutierten Stand der Technik liegt der Erfindung daher die Aufgabe zugrunde eine Dimmschaltung sowie ein Dimmverfahren vorzuschlagen, mit dem die vorstehend benannten Probleme überwunden werden. Insbesondere sollen die Verlustleistung minimiert und der Hardwareaufwand reduziert werden.

Diese Aufgabe wird erfindungsgemäß durch eine eingangs genannte, gattungsgemäße Dimmschaltung mit den Merkmalen des Anspruchs 1 gelöst. Der verfahrensbezogene Anteil der Aufgabe wird durch ein Verfahren zum Dimmen eines trägheitsfreien Leuchtmittels mit den Merkmalen des Anspruchs 10 gelöst.

Eine erfindungsgemäße Dimmschaltung weist u.a. die Komponenten eines herkömmlichen Schaltnetzteils auf, und zwar eine Schaltnetzteilsteuerung und einen Leistungsschalter, der durch die Schaltnetzteilsteuerung mit einer Schaltnetzteilsteuerungsfrequenz abhängig von dem gewünschten Dimmwert angesteuert wird.

Darüber hinaus verfügt das Schaltnetzteil über einen Aktivierungseingang. Durch den Aktivierungseingang kann das Schaltnetzteil zum Bereitstellen von Energie an seinem Ausgang aktiviert und deaktiviert werden. Der Aktivierungseingang kann den Eingangsstrom des Schaltnetzteils beeinflussen. Gemäß einer anderen Ausgestaltung wird die Schaltnetzteilsteuerung mittels des Aktivierungseingangs ein- und ausgeschaltet. Hiermit wird erreicht, dass an dem Ausgang des Schaltnetzteils in denjenigen Phasen, in denen am Aktivierungseingang ein Deaktivierungssignal anliegt, keine Spannung und in der Folge kein Strom abgreifbar ist. Liegt hingegen an dem Aktivierungseingang ein Aktivierungssignal an, kann an dem Ausgang des Schaltnetzteils die von diesem bereitgestellte Schaltspannung abgegriffen werden. Zur Steuerung des Aktivierungseinganges dient ein Pulsgenerator. Dieser Pulsgenerator beaufschlagt den Aktivierungseingang in einer Pulsgeneratorfrequenz mit einer Spannung. Je nach Auslegung des Aktivierungseinganges bilden die den Aktivierungseingang beaufschlagenden Spannungspulse Aktivierungssignale oder umgekehrt die Zwischenpulsphasen. Durch die Frequenz dieser Pulse wird sodann das Schaltnetzteil in der Pulsgeneratorfrequenz wechselweise aktiviert und deaktiviert. Somit kann mittels des Pulsgenerators direkt Einfluss auf die am Ausgang des Schaltnetzteils anliegende Spannung Einfluss genommen werden.

Durch diese Maßnahme wird im Unterschied zu dem eingangs beschriebenen Verfahren aus dem Stand der Technik keine unnötige Verlustleistung erzeugt. Es wird nur diejenige Leistung zur Verfügung gestellt, die von dem trägheitsfreien Leuchtmittel benötigt wird. Darüber hinaus wird kein zusätzlicher Leistungsschalter benötigt. Vielmehr macht man sich in geschickter Weise den bei einem solchen Schaltnetzteil typischerweise ohnehin vorhandenen Aktivierungseingang zu Nutze, um das Schaltnetzteil zu aktivieren bzw. zu deaktivieren. Wenn im Rahmen dieser Ausführungen von Aktivieren und Deaktivieren die Rede ist, bezieht sich dieses auf die am Ausgang des Schaltnetzanteils anliegende Spannung. Dieses impliziert nicht notwendiger Weise, dass das Schaltnetzteil in den Deaktivierungsphasen komplett stromlos geschaltet ist.

Bei dieser Dimmschaltung - gleiches gilt für das beschriebene Dimmverfahren - steuert die Schaltnetzteilsteuerung den Leistungsschalter mit einer Schaltnetzteilsteuerungsfrequenz an. Hierdurch wird Energie entsprechend dem eingestellten Dimmwert am Ausgang des Schaltnetzteils bereitgestellt. Der diesbezügliche Strom schwankt um einen Mittelwert verschieden von 0 und ist darüber hinaus stets größer als 0. Durch eine Veränderung der Schaltnetzteilsteuerungsfrequenz kann dieser Strom bis zu einem unteren Dimmniveau eingestellt werden, wobei dieses untere Dimmniveau so gewählt ist, dass bis zu diesem eine Farbortverschiebung noch nicht zu beobachten ist. Dieses wiederum ist abhängig von der Qualität der beispielsweise als trägheitsfreie Leuchtmittel eingesetzten LEDs. Insofern kann dieses untere Dimmniveau bei 20% - 30% oder bei LEDs der neusten Generation auch bei 8% - 10% liegen. Die Schaltnetzteilsteuerung ist typischerweise als freischwingende Kippschaltung ausgeführt. Dieses ist zweckmäßig, da dann keine Regelung erforderlich ist und die Reaktionszeit entsprechend schnell ist. Eine solche freischwingende Kippschaltung arbeitet mit einer Drossel, wobei das Schaltelement bei Unterschreiten eines vorgegebenen Stroms ein- und bei Überschreiten eines vorgegebenen Stroms ausschaltet. Durch die Vorgabe dieser Ströme lässt sich unmittelbar die Helligkeit des Leuchtmittels beeinflussen. Die rasche Reaktionszeit und die nicht erforderliche Regelung erlauben eine Beeinflussung der Schaltnetzteilsteuerung von außen, und zwar über den Aktivierungseingang mittels eines Pulsgenerators, was für das weitere Dimmen, wie nachfolgend beschrieben, vorgenommen wird.

Soll das Leuchtmittel weiter gedimmt werden, wird die Bestromung desselben dadurch reduziert, dass der Aktivierungseingang des Schaltnetzteils mit einer Pulsgeneratorfrequenz des Pulsgenerators beaufschlagt wird. Diese Frequenz ist signifikant kleiner als die Schaltnetzteilsteuerungsfrequenz, wenn das mit dieser vorgesehene untere Dimmniveau erreicht ist. Die Pulsgeneratorfrequenz kann durchaus etwa zwei Zehnerpotenzen kleiner sein als die Schaltnetzteilsteuerungsfrequenz. Durch die zyklische Deaktivierung des Schaltnetzteils liegt an seinem Ausgang zyklisch keine Spannung an. Zeitaufgelöst erhält das Leuchtmittel auf diese Weise weniger Strom, wodurch das gewünschte weitere Dimmen bewirkt ist.

Typischerweise ist dem Schaltnetzteil nachgeschaltet eine Baugruppe, durch die die am Ausgang des Schaltnetzteils bereitgestellte Spannung verlustarm in einen konstanten Strom gewandelt wird. Hierzu wird eine Induktivität, typischerweise als Speicherdrossel ausgelegt, genutzt, um die Energie portioniert dem Ausgang der Dimmschaltung und damit dem Lastkreis zur Verfügung zu stellen.

In einer Weiterbildung hierzu ist vorgesehen, parallel zu dem Ausgang, an dem das trägheitsfreie Leuchtmittel angeschlossen ist, einen Kondensator zu schalten. Mittels dieses Kondensators wird der bereitgestellte Strom gesiebt und geglättet. Darüber hinaus wird durch diesen Kondensator sichergestellt, dass die Spannung am Ausgang der Dimmschaltung während jeglicher Dimmstufen immer verschieden von 0 ist. Auf diese Weise ist sichergestellt, dass immer ein gewisser DC-Anteil dem Leuchtmittel zur Verfügung gestellt wird und dadurch das trägheitsfreie Leuchtmittel nie vollständig stromlos wird, wodurch ein Flackern des trägheitsfreien Leuchtmittels wirksam vermieden wird. Dadurch, dass ein vollständiges Ausschalten des trägheitsfreien Leuchtmittels effektiv vermieden wird, wird das Licht für den Betrachter als wesentlich ruhiger wahrgenommen. Außerdem können so etwaige Artefakte in Videoaufzeichnungen vermieden werden, da eine Ausleuchtung einer Umgebung durch ein durch die erfindungsgemäße Dimmschaltung angesteuertes, trägheitsfreies Leuchtmittel zu keinem Zeitpunkt unterbrochen wird.

Durch die Kombination der Induktivität mit dem Kondensator wird die durch das Schaltnetzteil bereitgestellte Spannung in der zweiten Ordnung tiefpassgefiltert. Hierdurch wird eine weitere Glättung der zur Verfügung gestellten Spannung und in der Folge des abgegebenen Stromes erreicht.

Nachfolgend ist die Erfindung anhand eines Ausführungsbeispiels unter Bezugnahme auf die beigefügten Figuren beschrieben. Es zeigen:

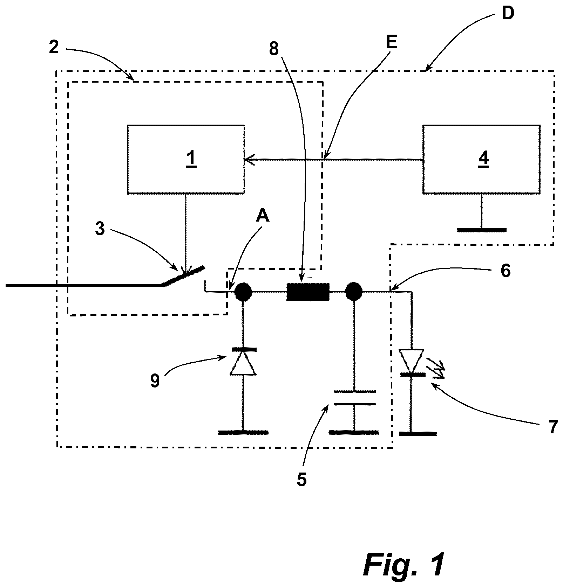

- **Fig. 1:**: eine Dimmschaltung zum Dimmen eines trägheitsfreien Leuchtmittels,
- **Fig. 2:**: ein Strom-Zeit-Diagramm zum Darstellen des am Ausgang des Schaltnetzteils der Dimmschaltung der Figur 1 anliegenden Stroms und
- **Fig. 3:**: ein Strom-Zeit-Diagramm zum Darstellen des Stromverlaufes am Ausgang der Dimmschaltung.

Eine Schaltnetzteilsteuerung 1 eines Schaltnetzteils 2 als Teil einer Dimmschaltung D steuert einen dem Schaltnetzteil 2 zugehörigen Leistungsschalter 3. Die Schaltnetzteilsteuerung 1 ist als eine mit einer Drossel arbeitende freischwingende Kippschaltung ausgeführt. Die Schaltnetzteilsteuerung 1 wird darüber hinaus von einem Pulsgenerator 4 angesteuert. Dieser ist an den Aktivierungseingang E des Schaltnetzteils 2 angeschlossen.

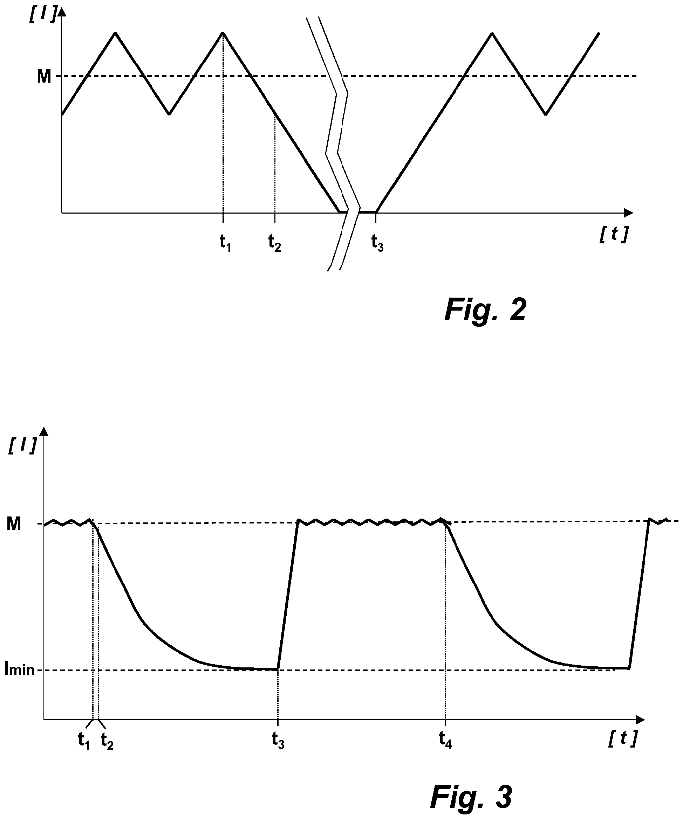

Betrachtet wird im Folgenden unter Bezugnahme auf Figur 2 zunächst der durch den Leistungsschalter 3 fließende Strom bei einem Betrieb des Schaltnetzteils 2. Figur 2 zeigt zeitlich aufgelöst den an dem Ausgang A des Schaltnetzteils 2 anliegenden Strom I. Bis zu einem Zeitpunkt der zwischen t₁ und t₂ liegt, wird der Leistungsschalter 3 von der Schaltnetzteilsteuerung 1 mit einer der gewünschten Dimmstufe entsprechenden Schaltnetzteilsteuerungsfrequenz angesteuert. Am Ausgang A des Schaltnetzteils 2 liegt aus diesem Grunde ein um einen Mittelwert M schwankender Strom I an, wobei der zeitlich aufgelöste Strom I stets verschieden von 0 ist. In dem beschriebenen Ausführungsbeispiel wird der Strom I bis zu einem bestimmten unteren Dimmwert von 8% ausschließlich über diesen Modus gedimmt. Ein derartiges Dimmen ist an sich bekannt. Es versteht sich, dass mit diesem Modus der untere Dimmwert auch einen von 8% verschiedenen Wert aufweisen kann, beispielsweise 10%, 20% oder auch 30%. Soll der Dimmwert weiter gesenkt werden, wird die Leistungsabgabe des Schaltnetzteils 2 phasenweise deaktiviert. Das Deaktivieren und erneute Aktivieren der Leistungsabgabe wird durch den den Aktivierungseingang E mit einer bestimmten Frequenz beaufschlagenden Pulsgenerator 4 definiert. Die von dem Pulsgenerator 4 bereitgestellte Pulsgeneratorfrequenz liegt bei dem dargestellten Ausführungsbeispiel etwa zwei Zehnerpotenzen tiefer, als die durch die Schaltnetzteilsteuerung 1 bereitgestellte Frequenz zum Ansteuern des Leistungsschalters 3. Bei dem dargestellten Ausführungsbeispiel wird durch den Pulsgenerator 4 als Teil der Dimmschaltung D die Schaltnetzteilsteuerung 1 durch Ansteuerung des Aktivierungseingangs E mit dem Pulsgenerator 4 in der bereitgestellten Frequenz deaktiviert und aktiviert. Der an dem Ausgang A des Schaltnetzteils 2 anliegende Strom I bricht daher im Zeitraum von t₂ bis t₃ zusammen. Wird die Schaltnetzteilsteuerung 1 über den Pulsgenerator 4 zum Zeitpunkt t₃ wieder aktiviert, wird der Leistungsschalter 3 erneut durch die wieder in Betrieb befindliche Schaltnetzteilsteuerung 1 in der Schaltnetzteilsteuerungsfrequenz angesteuert, sodass dann am Ausgang des Schaltnetzteils 2 wiederum ein um den Mittelwert M schwankender Strom I anliegt. Dieser Zustand bleibt für eine Phase der Pulsgeneratorfrequenz erhalten, bevor, getriggert durch die anschließende Phase der Pulsgeneratorfrequenz des Schaltnetzteils 2 wieder deaktiviert wird.

Bei dem dargestellten Ausführungsbeispiel verfügt die Dimmschaltung D über einen Kondensator 5, der parallel zu dem Ausgang 6 der Dimmschaltung D, an dem ein trägheitsfreies Leuchtmittel 7 angeschlossen ist, geschaltet ist. In diesem Ausführungsbeispiel weist die Dimmschaltung D darüber hinaus eine Induktivität 8 sowie eine Diode 9 auf. Mittels des Kondensators 5 und der Induktivität 8 ist die an dem Ausgang 6 der Dimmschaltung D anliegende Spannung in der zweiten Ordnung tiefpassgefiltert.

Dieser die Induktivität 8, als Drossel ausgeführt, und den Kondensator 5 bildende Schaltungsteil der Dimmschaltung D bewirkt, dass in den Phasen, in denen am Ausgang des Schaltnetzteils 2 keine Energie zur Verfügung steht, dennoch das trägheitsfreie Leuchtmittel 7 bis zu einem unteren Stromlevel mit Energie versorgt ist. Vornehmlich verantwortlich für das untere Strom level ist die in dem Kondensator 5 gespeicherte Energie. Figur 3 veranschaulicht den zeitlich aufgelösten Stromverlauf am Ausgang 6 der Dimmschaltung D. Der zeitliche Bereich bis zu einem Zeitpunkt zwischen t₁ und t₂ zeigt eine gesiebte und tiefpassgefilterte Spannung, wie sie durch das Schaltnetzteil 2 entsprechend der Schaltnetzteilsteuerungsfrequenz bereitgestellt wird. Der Strom I hat dabei einen Mittelwert M. Schaltet der Pulsgenerator 4 die Schaltnetzteilsteuerung 1 aus, bricht die Energieversorgung am Ausgang des Schaltnetzteils 2 für die Deaktivierungsphase zusammen. Aufgrund der in dem Kondensator 5 gespeicherten Spannung ist jedoch sichergestellt, dass am Ausgang 6 der Dimmschaltung D die Energieversorgung nicht vollständig zusammenbricht und das trägheitsfreie Leuchtmittel 7 weiterhin - wenn auch mit geringerer Energie - bestromt wird. Die Kapazität des Kondensators 5 ist so ausgelegt, dass der Ausgangsstrom nicht unter das vorgenannte untere Stromlevel UL, das durch das untere Spannungslevel definiert ist, abfällt. Dieses beinhaltet eine Anpassung der Kapazität des Kondensators 5 auch an die Frequenz, mit der der Pulsgenerator 4 den Aktivierungseingang E der Schaltnetzteilsteuerung 1 beaufschlagt. Wenn zum Zeitpunkt t₃ der Pulsgenerator 4 die Schaltnetzteilsteuerung 1 wieder aktiviert, wird, wie dieses bereits zu dem Stromverlauf der Figur 2 gezeigt ist, das trägheitsfreie Leuchtmittel 7 in der Schaltnetzteilsteuerungsfrequenz bestromt. Dieser Schaltungszustand dauert an bis im Zeitpunkt t₄ durch die von dem Pulsgenerator 4 generierte, am Aktivierungseingang E anliegende Pulsgeneratorfrequenz eine erneute Deaktivierung der Schaltnetzteilsteuerung 1 herbeiführt. Dieser Vorgang setzt sich zyklisch fort.

Als trägheitsfreies Leuchtmittel 7 dient bei dem dargestellten Ausführungsbeispiel ein LED Array.

Die Erfindung ist in den Figuren anhand eines Ausführungsbeispiels beschrieben worden. Ohne den Umfang der geltenden Ansprüche zu verlassen, ergeben sich für einen Fachmann zahlreiche weitere Ausgestaltungen, die erfindungsgemäße Lehre umzusetzen, ohne dass dieses im Rahmen dieser Ausführungen im Einzelnen dargelegt werden müsste.

### Bezugszeichenliste

- 1: Schaltnetzteilsteuerung
- 2: Schaltnetzteil
- 3: Leistungsschalter
- 4: Pulsgenerator
- 5: Kondensator
- 6: Ausgang Dimmschaltung
- 7: trägheitsfreies Leuchtmittel
- 8: Induktivität
- 9: Diode
- A: Ausgang Schaltnetzteil
- D: Dimmschaltung
- E: Aktivierungseingang
- I: Strom
- Iₘᵢₙ: unteres Level
- t: Zeit
- M: Mittelwert

## Patentansprüche

1. Dimmschaltung zum Dimmen von zumindest einem trägheitsfreien Leuchtmittel (7), umfassend ein Schaltnetzteil (2) mit einer Schaltnetzteilsteuerung (1) und mit einem durch die Schaltnetzteilsteuerung (1) angesteuerten Leistungsschalter (3), der abhängig von einem gewünschten Dimmwert mit einer Schaltnetzteilsteuerfrequenz ansteuerbar ist, sowie umfassend einen Ausgang (6) zum Anschließen des zumindest einen trägheitsfreien Leuchtmittels (7), wobei
• die Dimmschaltung (D) ferner einen Pulsgenerator (4) umfasst, und
• das Schaltnetzteil (2) über einen Aktivierungseingang (E) verfügt, **dadurch gekennzeichnet, dass**
• der Pulsgenerator (4) an den Aktivierungseingang (E) des Schaltnetzteils (2) angeschlossen ist,
• wobei durch den Aktivierungseingang (E) die Schaltnetzteilsteuerung (1) aktivierbar und deaktivierbar ist,
• derart, dass der Pulsgenerator (4) die Schaltnetzteilsteuerung (1) über den Aktivierungseingang (E) nur in einem unteren Bereich des gesamten Dimmbereichs ansteuert,
• sodass zum Dimmen in dem unteren Bereich des Dimmbereichs der Aktivierungseingang (E) des Schaltnetzteils (2) durch den Pulsgenerator (4) in einer Pulsgeneratorfrequenz mit einer Spannung zum pulsgeneratorfrequenzabhängigen Aktivieren und Deaktivieren von am Ausgang (A) des Schaltnetzteils (2) abgreifbarer Energie beaufschlagt ist, wobei die Pulsgeneratorfrequenz unterhalb der Frequenz liegt, mit der die Schaltnetzteilsteuerung (1) den Leistungsschalter (3) ansteuert.

2. Dimmschaltung nach Anspruch 1, **dadurch gekennzeichnet, dass** zwischen dem Leistungsschalter (3) des Schaltnetzteils (2) und dem Ausgang (6) der Dimmschaltung (D) zum Anschließen des zumindest einen Leuchtmittels (7) eine Induktivität (8) geschaltet ist.

3. Dimmschaltung nach Anspruch 2, **dadurch gekennzeichnet, dass** die Induktivität eine Arbeitsinduktivität, etwa eine Induktivität (8) mit nur wenigen Mikrohenry aufweist.

4. Dimmschaltung nach einem der Ansprüche 1 bis 3, **dadurch gekennzeichnet, dass** parallel zu dem Ausgang (6) der Dimmschaltung (D) ein Kondensator (5) geschaltet ist.

5. Dimmschaltung nach Anspruch 4, **dadurch gekennzeichnet, dass** der Kondensator (5) eine Kapazität von wenigen µF bis zu einigen Zehner µF, insbesondere etwa 3,3 µF aufweist.

6. Dimmschaltung nach einem der Ansprüche 1 bis 5, **dadurch gekennzeichnet, dass** die Frequenz mit der die Schaltnetzteilsteuerung (1) den Leistungsschalter (3) schaltet größer oder gleich 300 kHz ist.

7. Dimmschaltung nach einem der Ansprüche 1 bis 6, **dadurch gekennzeichnet, dass** der Pulsgenerator den Aktivierungseingang (E) des Schaltnetzteils (2) in einer Frequenz von größer oder gleich 2,5 kHz beaufschlagt.

8. Dimmschaltung nach einem der Ansprüche 1 bis 7, **dadurch gekennzeichnet, dass** an dem Ausgang (6) der Dimmschaltung (D) zumindest ein trägheitsfreies Leuchtmittel (7) anschliessbar ist.

9. Dimmschaltung nach einem der Ansprüche 1 bis 8, **dadurch gekennzeichnet, dass** die Schaltnetzteilsteuerung (1) als freischwingende Kippschaltung ausgeführt ist.

10. Verfahren zum Dimmen zumindest eines trägheitsfreien Leuchtmittels (7) mittels einer Dimmschaltung (D), umfassend
• ein Schaltnetzteil (2),
• einen von seiner Schaltnetzteilsteuerung (1) angesteuerten Leistungsschalter (3),
• sowie umfassend einen Ausgang (6), an dem das zumindest eine trägheitsfreie Leuchtmittel (7) anschließbar ist,
• wobei der Leistungsschalter (3) in Abhängigkeit von einer gewünschten Dimmstufe, bis zu einem unteren Dimmbereich mit einer Schaltnetzteilsteuerungsfrequenz von der Schaltnetzteilsteuerung (1) angesteuert wird,
**dadurch gekennzeichnet, dass**
• das Schaltnetzteil über einen Aktivierungseingang (E) verfügt,
• die Dimmschaltung ferner einen Pulsgenerator (4) umfasst und
• der Pulsgenerator (4) an den Aktivierungseingang (E) des Schaltnetzteils (2) angeschlossen ist,
• wobei nur in dem unteren Dimmbereich der Aktivierungseingang (E) des Schaltnetzteils (2) mit einer Pulsgeneratorfrequenz des Pulsgenerators (4) beaufschlagt wird, sodass
• durch den Aktivierungseingang (E) des Schaltnetzteils (2) die Schaltnetzteilsteuerung (1) wechselweise aktiviert und deaktiviert wird, und mittels des Pulsgenerators (4) der Aktivierungseingang (E) des Schaltnetzteils (2) mit einer Spannung in einer Pulsgeneratorfrequenz, die kleiner als die Schaltnetzteilsteuerungsfrequenz ist, beaufschlagt wird,
• sodass entsprechend der Pulsgeneratorfrequenz am Leistungsschalter (3) die Leistungsbereitstellung unterbrochen wird.

11. Verfahren nach Anspruch 10, **dadurch gekennzeichnet, dass** mittels einer in Reihe zu dem Leistungsschalter (3) geschalteten Induktivität (8) der am Leistungsschalter (3) anliegende Strom in Energieportionen an den Ausgang (6) weitergeleitet wird.

12. Verfahren nach einem der Ansprüche 10 oder 11, **dadurch gekennzeichnet, dass** mittels eines parallel zum Ausgang (6) der Dimmschaltung (D) geschalteten Stromspeichers, etwa eines Kondensators (5), in Phasen, in denen am Ausgang (A) des Schaltnetzteils (2) die Energieversorgung in Folge einer Pulsgeneratorbeeinflussung des Aktivierungseinganges (E) unterbrochen ist, von dem Stromspeicher (5) Energie bereitgestellt wird, damit der am Ausgang (6) anliegende Strom nicht zusammenbricht, bevor, gesteuert durch die Pulsgeneratorfrequenz, erneut Energie am Ausgang (A) des Schaltnetzteils (2) anliegt.

## Claims

1. Dimming circuit for dimming at least one inertia-free lamp (7), comprising a switched-mode power supply (2) with a switched-mode power supply control (1) and with a power switch (3) controlled by the switched-mode power supply control (1), which power switch can be controlled with a switched-mode power supply control frequency depending on a desired dimming value, and comprising an output (6) for connecting the at least one inertia-free lamp (7), wherein
• the dimming circuit (D) further comprises a pulse generator (4) and
• the switched-mode power supply (2) has an activation input (E), **characterized by the fact** that
• the pulse generator (4) is connected to the activation input (E) of the switched-mode power supply (2),
• whereby the switched-mode power supply control (1) can be activated and deactivated by the activation input (E),
• such that the pulse generator (4) controls the switched-mode power supply control (1) via the activation input (E) only in a lower area of the entire dimming range,
• so that for dimming in the lower area of the dimming range the activation input (E) of the switched-mode power supply (2) is supplied by the pulse generator (4) at a pulse generator frequency with a voltage for pulse generator frequency-dependent activation and deactivation of energy which can be tapped off at the output (A) of the switched-mode power supply (2), the pulse generator frequency being below the frequency with which the switched-mode power supply control (1) actuates the power switch (3).

2. Dimming circuit in accordance with Claim 1, **characterized by the fact** that an inductor (8) is connected between the power switch (3) of the switched-mode power supply (2) and the output (6) of the dimmer circuit (D) for connecting the at least one lamp (7).

3. Dimming circuit in accordance with Claim 2, **characterized by the fact** that the inductor has a working inductance, such as an inductor (8) with only a few microhenries.

4. Dimming circuit in accordance with any of Claims 1 to 3, **characterized by the fact** that a capacitor (5) is connected in parallel with the output (6) of the dimming circuit (D).

5. Dimming circuit in accordance with Claim 4, **characterized by the fact** that the capacitor (5) has a capacitance of a few µF up to a few tens of µF, in particular about 3.3 µF.

6. Dimming circuit in accordance with any of Claims 1 to 5, **characterized by the fact** that the frequency at which the switched-mode power supply control (1) switches the power switch (3) is greater than or equal to 300 kHz.

7. Dimming circuit in accordance with any of Claims 1 to 6, **characterized by the fact** that the pulse generator acts on the activation input (E) of the switched-mode power supply (2) at a frequency greater than or equal to 2.5 kHz.

8. Dimming circuit in accordance with any of Claims 1 to 7, **characterized by the fact** that at least one inertia-free lamp (7) can be connected to the output (6) of the dimming circuit (D).

9. Dimming circuit in accordance with any of Claims 1 to 8, **characterized by the fact** that the switched-mode power supply control (1) is designed as a free-running flip-flop circuit.

10. Method for dimming at least one inertia-free lamp (7) by means of a dimming circuit (D), comprising
• a switched-mode power supply (2),
• a power switch (3) controlled by its switched-mode power supply control (1),
• and comprising an output (6) to which the at least one inertia-free lamp (7) can be connected,
• wherein the power switch (3), depending on a desired dimming level, is controlled by the switched-mode power supply control (1) up to a lower dimming range with a switched-mode power supply control frequency,
**characterized by the fact** that
• the switched-mode power supply has an activation input (E),
• the dimming circuit further comprises a pulse generator (4) and
• the pulse generator (4) is connected to the activation input (E) of the switched-mode power supply (2),
• a pulse generator frequency of the pulse generator (4) being applied to the activation input (E) of the switched-mode power supply (2) only in the lower dimming range, so that
• through the activation input (E) of the switched-mode power supply (2) the switched-mode power supply control (1) is alternately activated and deactivated, and by means of the pulse generator (4) the activation input (E) of the switched-mode power supply (2) is suppled with a voltage in a pluse generator frequency which is lower than the switched-mode power supply control frequency,
• so that the power supply is interrupted according to the pulse generator frequency at the power switch (3).

11. Method in accordance with Claim 10, **characterized by the fact** that by means of an inductor (8) connected in series with the power switch (3), the current applied to the power switch (3) is forwarded to the output (6) in energy portions.

12. Method in accordance with any of Claims 10 or 11, **characterized by the fact** that by means of a current storage device, such as a capacitor (5), connected in parallel with the output (6) of the dimmer circuit (D), energy is supplied by the current storage device (5) in phases in which the energy supply is interrupted at the output (A) of the switched-mode power supply (2) as a result of a pulse generator influencing the activation input (E), so that the current applied to the output (6) does not collapse before, controlled by the pulse generator frequency, energy is again applied to the output (A) of the switched-mode power supply (2).

## Revendications

1. Circuit de gradation pour la gradation d'au moins une lampe sans inertie (7), comprenant un bloc d'alimentation à découpage (2) avec une commande d'alimentation à découpage (1) et avec un interrupteur de puissance (3) commandé par la commande d'alimentation à découpage (1), lequel interrupteur de puissance peut être actionné avec une fréquence de commande d'alimentation à découpage en fonction d'une valeur de gradation souhaitée, et comprenant une sortie (6) pour le raccordement de l'au moins une lampe sans inertie (7), dans lequel
• le circuit de gradation (D) comprend en outre un générateur d'impulsions (4) et
• le bloc d'alimentation à découpage (2) possède une entrée d'activation (E), **caractérisée en ce que**
• le générateur d'impulsions (4) est raccordé à l'entrée d'activation (E) du bloc d'alimentation à découpage (2),
• où la commande d'alimentation à découpage (1) peut être activée et désactivée par l'entrée d'activation (E),
• de telle sorte que le générateur d'impulsions (4) ne commande la commande d'alimentation à découpage (1) via l'entrée d'activation (E) que dans une zone inférieure de toute la plage de gradation,
• de sorte que pour la gradation dans la zone inférieure de la plage de gradation, l'entrée d'activation (E) du bloc d'alimentation à découpage (2) est alimentée par une tension appliquée par le générateur d'impulsions (4) à une fréquence de générateur d'impulsions pour l'activation et la désactivation en fonction de la fréquence du générateur d'impulsions de l'énergie qui peut être prélevée à la sortie (A) du bloc d'alimentation à découpage (2), la fréquence du générateur d'impulsions étant inférieure à la fréquence avec laquelle la commande d'alimentation à découpage (1) actionne l'interrupteur de puissance (3).

2. Circuit de gradation selon la revendication 1, **caractérisé en ce qu'**une inductance (8) est connectée entre l'interrupteur de puissance (3) du bloc d'alimentation à découpage (2) et la sortie (6) du circuit de gradation (D) pour la connexion d'au moins une lampe (7).

3. Circuit de gradation selon la revendication 2, **caractérisé en ce que** l'inducteur a une inductance de travail, comme un inducteur (8) avec seulement quelques microhenries.

4. Circuit de gradation selon l'une des revendications 1 à 3, **caractérisé en ce qu'**un condensateur (5) est connecté en parallèle avec la sortie (6) du circuit de gradation (D).

5. Circuit de gradation selon la revendication 4, **caractérisé en ce que** le condensateur (5) a une capacité de quelques µF jusqu'à quelques dizaines de µF, en particulier environ 3,3 µF.

6. Circuit de gradation selon l'une des revendications 1 à 5, **caractérisé en ce que** la fréquence à laquelle la commande d'alimentation à découpage (1) commute l'interrupteur de puissance (3) est supérieure ou égale à 300 kHz.

7. Circuit de gradation selon l'une des revendications 1 à 6, **caractérisé en ce que** le générateur d'impulsions applique l'entrée d'activation (E) du bloc d'alimentation à découpage (2) à une fréquence supérieure ou égale à 2,5 kHz.

8. Circuit de gradation selon l'une des revendications 1 à 7, **caractérisé en ce qu'**au moins une lampe sans inertie (7) peut être connectée à la sortie (6) du circuit de gradation (D).

9. Circuit de gradation selon l'une des revendications 1 à 8, **caractérisé en ce que** la commande d'alimentation à découpage (1) est conçue comme un circuit de bascule libre.

10. Procédé de gradation d'au moins une lampe sans inertie (7) au moyen d'un circuit de gradation (D), comprenant
• un bloc d'alimentation à découpage (2),
• un interrupteur de puissance (3) actionné par sa commande d'alimentation à découpage (1),
• et comprenant une sortie (6) à laquelle peut être connectée au moins une lampe sans inertie (7),
• dans lequel l'interrupteur de puissance (3) est commandé par la commande d'alimentation à découpage (1) avec une fréquence de commande d'alimentation à découpage en fonction d'un niveau de gradation souhaité, jusqu'à une plage de gradation inférieure,
**caractérisé en ce que**
• le bloc d'alimentation à découpage possède une entrée d'activation (E),
• le circuit de gradation comprend en outre un générateur d'impulsions (4) et
• le générateur d'impulsions (4) est connecté à l'entrée d'activation (E) du bloc d'alimentation à découpage (2),
• dans lequel une fréquence du générateur d'impulsions (4) est appliquée à l'entrée d'activation (E) du bloc d'alimentation à découpage (2) uniquement dans la plage de gradation inférieure, de sorte que
• par l'entrée d'activation (E) du bloc d'alimentation à découpage (2), la commande d'alimentation à découpage (1) est alternativement activée et désactivée, et que par le générateur d'impulsions (4), l'entrée d'activation (E) du bloc d'alimentation à découpage (2) est alimentée avec une tension à une fréquence du générateur d'impulsions qui est inférieure à la fréquence de la commande d'alimentation à découpage,
• afin que l'alimentation électrique soit interrompue en fonction de la fréquence du générateur d'impulsions au niveau de l'interrupteur de puissance (3).

11. Procédé selon la revendication 10, **caractérisé en ce que** le courant appliqué au commutateur de puissance (3) est transmis à la sortie (6) par portions d'énergie au moyen d'une inductance (8) connectée en série avec l'interrupteur de puissance (3).

12. Procédé selon l'une des revendications 10 ou 11, **caractérisé en ce qu'**au moyen d'un dispositif de stockage de courant, tel qu'un condensateur (5), connecté en parallèle avec la sortie (6) du circuit de gradation (D), de l'énergie est fournie par le dispositif de stockage de courant dans des phases où l'alimentation en énergie est interrompue à la sortie (A) du bloc d'alimentation à découpage (2) en raison d'un générateur d'impulsions influençant l'entrée d'activation (E), de sorte que le courant appliqué à la sortie (6) ne chute pas avant que, sous l'effet de la fréquence du générateur d'impulsions, de l'énergie soit à nouveau appliquée à la sortie (A) du bloc d'alimentation à découpage (2).
